# EUROPÄISCHE PATENTSCHRIFT

(11) **EP 1 226 476 B1**
(45) Veröffentlichungstag und Bekanntmachung des Hinweises auf die Patenterteilung: **07.04.2004**
(21) Anmeldenummer: 00974363.4
(22) Anmeldetag: 01.09.2000
(51) Int. Cl.: G05B 19/4103

(54) **VERFAHREN UND SCHALTUNGSANORDNUNG ZUR ERZEUGUNG VON LAGESOLLWERTEN FÜR EINEN LAGEREGELKREIS EINER NUMERISCH BAHNGESTEUERTEN MASCHINE**
METHOD AND CIRCUITRY FOR PRODUCING NOMINAL POSITION VALUES FOR A CLOSED LOOP POSITION CONTROL OF A NUMERICALLY CONTINUOUS-PATH CONTROLLED MACHINE
PROCEDE ET MONTAGE PERMETTANT D'OBTENIR DES VALEURS DE POSITION THEORIQUES POUR CIRCUIT DE REGULATION DE POSITION D'UNE MACHINE A COMMANDE DE TRAJECTOIRE CONTINUE NUMERIQUE

(30) Priorität: 08.09.1999 DE 19942805
(43) Veröffentlichungstag der Anmeldung: 31.07.2002
(73) Patentinhaber: Dr. Johannes Heidenhain GmbH, 83292 Traunreut (DE)
(72) Erfinder: KOHLER, Frieder, 83362 Lauter (DE); FAUSER, Matthias, 30938 Burgwedel (DE)
(86) Internationale Anmeldenummer: PCT/EP2000/008544
(87) Internationale Veröffentlichungsnummer: WO 2001/018622

(56) Entgegenhaltungen:
- EP-A- 0 469 617
- WO-A-98/15880
- DE-A- 4 303 090
- US-A- 4 214 192
- US-A- 4 603 286
- US-A- 5 541 864

## Beschreibung

Die vorliegende Erfindung betrifft ein Verfahren zur Erzeugung von Lagesollwerten für einen Lageregelkreis einer numerisch bahngesteuerten Maschine nach dem Oberbegriff des Anspruches 1. Gegenstand der Erfindung ist ferner eine Schaltungsanordnung zur Erzeugung von Lagesollwerten für einen Lageregelkreis einer numerisch bahngesteuerten Maschine nach dem Oberbegriff des Anspruches 8.

In numerisch bahngesteuerten Werkzeugmaschinen oder Robotern erfolgt die Erzeugung von Lagesollwerten als Sollwert-Vorgaben bzw. Führungsgrößen für die Lageregelkreise der jeweiligen Antriebe üblicherweise in vorgeordneten Interpolatoreinheiten. Den Interpolatoreinheiten werden zu diesem Zweck die gewünschten geometrischen Achsbewegungsfunktionen und Geschwindigkeitsprofile eingangsseitig vorgegeben. Ausgangsseitig liefert die Interpolatoreinheit diskrete Folgen von Lagesollwerten bzw. Abtastwerten auf einer Bahnkurve. Die Lagesollwerte werden mit einer definierten, üblicherweise festen Interpolator-Taktfrequenz f_{IPO} als Führungsgrößen an den nachgeordneten Lageregelkreis ausgegeben. Femer werden die von der Interpolatoreinheit erzeugten Lagesollwerte vor der Übergabe an den Lageregelkreis noch in einem Lagesollwert-Filter gefiltert, in der Regel in Form einer digitalen Tiefpassfilterung. Dies erfolgt, um die Maschine nicht zu unerwünschten Eigenschwingungen durch die Achsantriebsssysteme anzuregen und damit ggf. die Bearbeitungsqualität zu reduzieren.
Im Zusammenhang mit derartigen Varianten zur Erzeugung von Lagesollwerten in numerisch bahngesteuerten Maschinen sei z.B. auf die DE 43 03 090 A1 verwiesen.

Die Filterung im Lagesollwert-Filter wird hierbei üblicherweise so ausgelegt, dass im Spektrum der an den Lageregelkreis übergebenen Lagesollwerte bzw. Führungsgrößen möglichst keine Frequenzen im Bereich der Resonanzfrequenz f_{RES} der jeweiligen Maschine liegen bzw. in einem entsprechenden Resonanzfrequenzband B_{RES}. Andernfalls würde durch die Eigenschwingungen in den Maschinenachsen eine verminderte Oberflächenqualität im bearbeiteten Werkstück resultieren. Über eine Bandbegrenzung der Führungsgrößen in Form einer Tiefpassfilterung wird deshalb sichergestellt, dass das jeweilige Lagesollwert-Filter diejenigen Frequenzanteile sperrt, die größer als eine geeignet gewählte Maschinen-Nutzfrequenz f_{N} sind. Die entsprechende Maschinen-Nutzfrequenz f_{N} des Lagesollwert-Filters wird hierbei in Abhängigkeit der jeweiligen Resonanzfrequenz f_{RES} bzw. des Resonanzfrequenzbandes B_{RES} gewählt.

Im Falle von besonders niedrigen Resonanzfrequenzen f_{RES}, etwa f_{RES} ≈ 20Hz, resultiert bei der Auslegung der digitalen Lagesollwert-Filter jedoch ein zunehmender Rechenaufwand, um die gewünschte Filterwirkung zu erzielen.

Es ist daher die Aufgabe der vorliegenden Erfindung, ein Verfahren und eine Schaltungsanordnung zur Erzeugung von Lagesollwerten für einen Lageregelkreis einer numerisch bahngesteuerten Maschine anzugeben, über das sich für unterschiedlichste Maschinentypen ohne großen Aufwand Bahnfehler vermeiden lassen, die aufgrund angeregter Eigenschwingungen der Maschine resultieren.

Diese Aufgabe wird durch ein Verfahren mit den Merkmalen im kennzeichnenden Teil des Anspruches 1 gelöst.

Ferner wird diese Aufgabe durch eine Schaltungsanordnung mit den Merkmalen im kennzeichnenden Teil des Anspruches 8 gelöst.

Weiterbildungen und vorteilhafte Ausgestaltungen des erfindungsgemässen Verfahrens und der erfindungsgemäßen Schaltungsanordnung sind den jeweils abhängigen Ansprüchen zu entnehmen.

Gemäß der vorliegenden Erfindung wird nunmehr nicht primär das eingesetzte Lagesollwert-Filter an die jeweiligen dynamischen Charakteristika der Maschine - insbesondere an deren Resonanzfrequenz - angepasst, vielmehr wird auch die jeweilige Interpolator-Taktfrequenz bzw. die Interpolator-Taktdauer in Abhängigkeit der dynamischen Charakteristika der Maschine gezielt eingestellt, um die Anregung unerwünschter Eigenschwingungen zu vermeiden. Auf diese Art und Weise lässt sich der ansonsten für den gleichen Filtereffekt erforderliche Rechenaufwand im Lagesollwert-Filter vermeiden.

Da die erfindungsgemäßen Maßnahmen im Fall niedriger Resonanzfrequenzen i.w. eine Vergrößerung der Interpolator-Taktdauern bzw. einer Verkleinerung der Interpolator-Taktfrequenzen darstellen, steht nunmehr auf Seiten der Interpolatoreinheit auch eine entsprechend höhere Rechenleistung für andere Aufgaben zur Verfügung. Hierzu zählt etwa die Erzeugung von Lagesollwerten für noch mehr Maschinenachsen etc..

Als vorteilhaft erweist sich ferner der Einsatz eines Feininterpolators zwischen dem Lagesollwert-Filter und dem Lageregelkreis im erfindungsgemäßen Verfahren bzw. in der erfindungsgemäßen Schaltungsanordnung. Über den Feininterpolator werden hierbei Abtastwerte auf der Bahnkurve in dem Zeitraster erzeugt, in dem sie der nachgeordnete Lageregelkreis benötigt. Dabei ist besonders von Vorteil, dass durch den Feininterpolator die Interpolator-Taktfrequenz vom nachgeordneten Lageregelkreis, insbesondere der Lageregelungs-Taktfrequenz, entkoppelt ist; in der Regel liegt aber ein festes Verhältnis zwischen der Lageregelungs-Taktfrequenz und der Interpolator-Taktfrequenz vor.

Weitere Vorteile der vorliegenden Erfindung ergeben sich aus der nachfolgenden Beschreibung von Ausführungsbeispielen anhand der beiliegenden Figuren.

Dabei zeigt
- Fig. 1: ein schematisches Blockschaltbild einer Ausführungsform der erfindungsgemäßen Schaltungsanordnung,
- Fig. 2a, 2b: das Durchlassverhalten digitaler Lagesollwert-Filter mit einer unterschiedlichen Anzahl von Filterkoeffizienten.

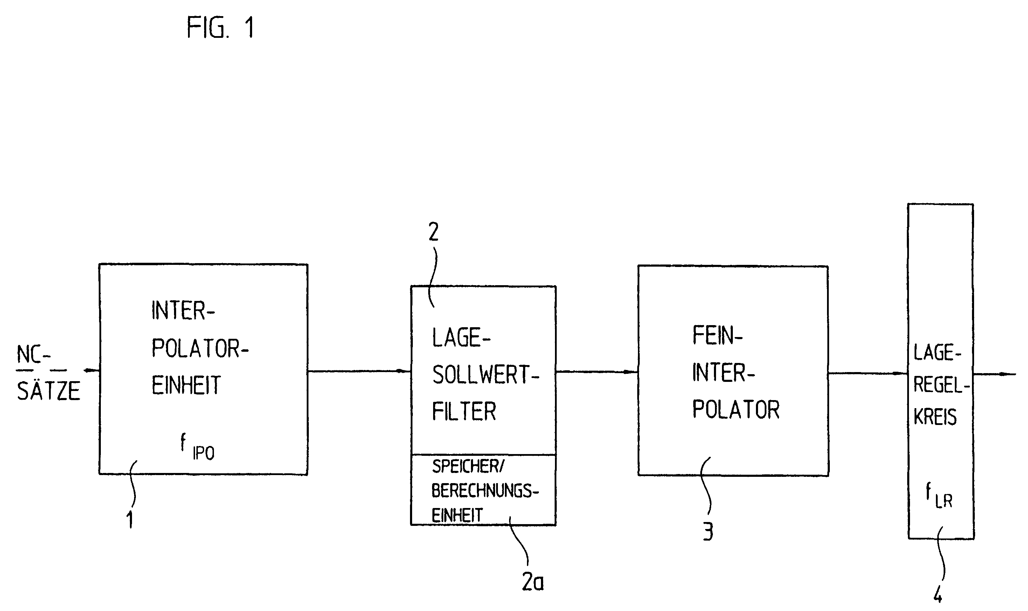

Fig. 1 zeigt ein Blockschaltbild einer möglichen erfindungsgemässen Schaltungsanordnung. Im nachfolgenden Ausführungsbeispiel wird davon ausgegangen, dass das erfindungsgemässe Verfahren an einer numerisch gesteuerten Werkzeugmaschine angewandt wird. Es besteht selbstverständlich aber auch die Möglichkeit das erfindungsgemässe Verfahren bei einem Roboter anzuwenden. Zur Vereinfachung wird lediglich eine Achse der Maschine exemplarisch erläutert. Das erfindungsgemässe Verfahren und die erfindungsgemäße Schaltungsanordnung werden aber üblicherweise für alle interpolierten Achsen einer Maschine vorgesehen.

Als wesentliche Komponenten der erfindungsgemäßen Schaltungsanordnung sind hierbei eine interpolatoreinheit 1, ein digitales Lagesollwert-Filter 2 sowie ein Lageregelkreis 4 aufzuführen. Als weitere Bestandteile der in Fig. 1 dargestellten Ausführungsform ist noch eine dem Lagesollwert-Filter zugeordnete Einheit 2a sowie ein Feininterpolator 3 zu erwähnen. Die Einheit 2a kann je nach Ausführungsform hierbei entweder als Speichereinheit oder aber als Berechnungseinheit ausgebildet sein; auf die genaue Funktion der optionalen Einheit 2a sowie auf die Funktion des Feininterpolators 3 wird später noch detaillierter eingegangen.

Der Interpolatoreinheit 1 werden eingangsseitig die gewünschten geometrischen Achsbewegungsfunktionen der Maschine z.B. in Form von NC-Sätzen vorgegegeben. Die Interpolatoreinheit 1 erzeugt auf Basis der Eingangs-Informationen Lagesollwerte für die jeweilige Maschinen-Achse, die mit einer bestimmten Interpolator-Taktfrequenz f_{IPO} bzw. Interpolator-Taktdauer T_{IPO} dem nachgeordneten Lagesollwert-Filter 2 übergeben werden.

Im Lagesollwert-Filter 2 werden die von der Interpolatoreinheit 1 vorgegegebenen Lagesollwerte anschließend in bekannter Art und Weise einer digitalen Filterung unterzogen. Das Lagesollwert-Filter 2 ist hierbei vorzugsweise als FIR-Filter ausgebildet und besitzt eine Ordnung zwischen 5 und 1024. Über die Filterung soll insbesondere vermieden werden, dass im Spektrum der an den Lageregelkreis 4 übergebenen Lagesollwerte bzw. Führungsgrößen noch Frequenzkomponenten im Bereich der Resonanzfrequenz f_{RES} der jeweiligen Maschine enthalten sind, die die Maschine zu unerwünschten Eigenschwingungen anregen würden. Zur Bandbegrenzung der Führungsgröße Lagesollwert wird im Lagesollwert-Filter 2 vorzugsweise eine Tiefpassfilterung vorgenommen. Dies bedeutet, dass alle Signalanteile herausgefiltert werden, die größer und gleich einer Maschinen-Nutzfrequenz f_{N} sind, die sich aus der niedrigsten maschinenspezifischen Resonanzfrequenz f_{RES} bzw. dem zugehörigen machinenspezifischen Resonanzfrequenzband Δf_{RES} ableitet. In der Praxis wird die Maschinen-Nutzfrequenz f_{N} beispielsweise als die Hälfte der niedrigsten Resonanfrequenz gewählt, d.h. f_{N} ≈ ½ f_{RES}·

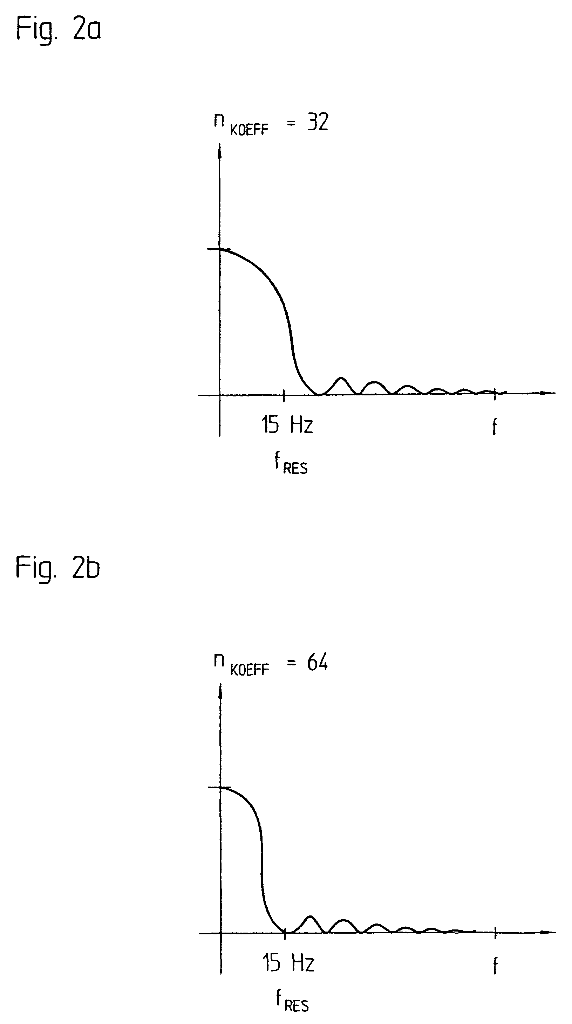

In den beiden Figuren 2a und 2b ist das Durchlassverhalten zweier digitaler Lagesollwert-Filter veranschaulicht, die ab der Maschinen-Nutzfrequenz f_{N} = 15Hz als Tiefpass und damit für höhere Frequenzen sperrend wirken. Die beiden Lagesollwert-Filter unterscheiden sich hierbei in der Anzahl n_{Koeff} von Filterkoeffizienten; so umfasst das zu Fig. 2a gehörende Lagesollwert-Filter insgesamt n_{Koeff} = 32 Filterkoeffizienten, während das zu in Fig. 2b gehörende Lagesollwert-Filter n_{Koeff} = 64 Filterkoeffizienten aufweist. Deutlich ersichtlich ist hierbei aus dem Vergleich von Fig. 2a und Fig. 2b, dass das Lagesollwert-Filter mit der größeren Anzahl n_{Koeff} = 64 von Filterkoeffizienten eine bessere Filterwirkung ab der Maschinen-Nutzfrequenz f_{N} aufweist.

Die gefilterten Lagesollwerte liefern nach der entsprechenden Weiterverarbeitung im Lageregelkreis 4 letzlich eine geringfügig modifizierte Bahnkurve, die an Stellen mit starken Krümmungen, wie etwa Ecken, etwas verrundet ist.

Über den Lageregelkreis 4 erfolgt in bekannter Art und Weise die Steuerung der Bewegung auf einer Bahnkurve auf Basis der eingangsseitig übergebenen Führungsgrößen respektive Lagesollwerte mit einer bestimmten Lageregelungs-Taktfrequenz f_{LR} bzw. einer Lageregelungs-Taktdauer T_{LR}. Eine typische Lageregelungs-Taktfrequenz beträgt etwa f_{LR} = 2kHz, die zugehörige Lageregelungs-Taktdauer T_{LR} = 500µsec.

Gemäß der vorliegenden Erfindung wird nunmehr neben bzw. ergänzend zum Lagesollwert-Filter 2 auch die Interpolator-Taktfrequenz f_{IPO} bzw. die Interpolator-Taktdauer T_{IPO} in Abhängigkeit der dynamischen Charakteristika der Maschine derart eingestellt, dass durch die dem Lageregelkreis 4 übergebenen Führungsgrößen bzw. Lagesollwerte keine Eigenschwingungen der Maschine angeregt werden. Das entsprechende erfindungsgemäße Vorgehen soll nachfolgend anhand eines einfachen Beispieles erläutert werden.

Hierbei sei wiederum von einer Maschinen-Nutzfrequenz f_{N} = 15Hz der jeweiligen Maschine ausgegangen. Die Lageregelungs-Taktdauer beträgt T_{LR} = 500µsec. Beim üblichen Vorgehen gemäß dem Stand der Technik sei desweiteren eine Interpolations-Taktdauer von T_{IPO} = 3msec vorgesehen. Um sicherzustellen, dass im Spektrum der an den Lageregler 4 übergebenen Lagesollwerte keine Frequenzanteile größer oder gleich f_{N} = 15Hz enthalten sind, wird ein digitales Lagesollwert-Filter 2 mit 64 Flterkoeffizienten eingesetzt, welches ab der Maschinen-Nutzfrequenz f_{N} = 15Hz sperrt. Wie aus den beiden oben diskutierten Figuren 2a und 2b ersichtlich war, werden zur Erzielung einer hinreichenden Filterwirkung n_{Koeff} = 64 Filterkoeffizienten benötigt, um die entsprechende Steilheit der Durchlasscharakteristik im Bereich der Maschinen-Nutzfrequenz f_{N} zu gewährleisten. Über das entsprechende Lagesollwert-Filter wird demzufolge über ein Filterungs-Zeilintervall T_{F} = T_{IPO} * n_{Koeff} = 3msec * 64 = 192msec gefiltert bzw. gemittelt. Für eine Filterung über dieses Filterungs-Zeitiniervall T_{F} wird eine Filterungs-Rechenzeit t_{cal} = 200µsec benötigt.

Erfindungsgemäß wurde nunmehr erkannt, dass die gleiche Filterwirkung auch mit einem deutlich weniger aufwendigen Lagesollwert-Filter erreicht werden kann. Hierzu wird ein Lagesollwert-Filter mit einer Anzahl n_{Koeff} = 32 Filterkoeffizienten verwendet, gleichzeitig aber die Interpolator-Taktdauer T_{IPO} auf T'_{IPO} = 6msec vergrößert. Da lediglich 32 Filterkoeffizienten des Lagesollwert-Filters berechnet werden müssen, verringert bzw. halbiert sich die hierzu erforderliche Filterungs-Rechenzeit t_{cal} auf t_{cal} = 100µsec. Es ist demzufolge in diesem Fall mit insgesamt lediglich 32 Filterkoeffizienten und entsprechend verringertem Rechenaufwand die gleiche Filterwirkung zu erzielen (siehe Fig. 2b) wie vorher mit insgesamt 64 Filterkoeffizienten. Dies wird letztlich dadurch erreicht, dass neben dem Lagesollwert-Filter auch die Interpolator-Taktfrequenz T_{IPO} in Abhängigkeit des dynamischen Charakteristika der Maschine definiert eingestellt wird, um durch die dem Lageregelkreis übergebenen Lagesollwerte keine Eigenschwingungen der Maschine anzuregen. Gemäß dem obigen Beispiel wurde zu diesem Zweck insbesondere das Filterungs-Zeitintervall T_{F} zum Erreichen einer gewünschten Filterwirkung bei verringerter Filerkoeffizienten-Anzahl n_{Koeff} konstant gehalten; hierzu wurde entsprechend die Interpolator-Taktdauer T_{IPO} vergrößert respektive die Interpolator-Taktfrequenz f_{IPO} verringert.

Erfindungsgemäß wurde demnach allgemein erkannt, dass sich bei einer vorgegeben Interpolator-Taktdauer T_{IPO} ein zur Erzielung einer bestimmten Filterwirkung benötigtes Lagesollwertfilter mit n_{Koeff} Filterkoeffizienten durch ein Lagesollwertfilter mit mit n'_{Koeff} = n_{Koeff}/p Filterkoeffizienten ersetzen lässt (p = 2, 3...), wenn eine modifizierte Interpolator-Taktdauer T'_{IPO} gemäß T'_{IPO} = p * T_{IPO} gewählt wird. Auch die Interpolator-Taktfrequenz f'_{IPO} wird demzufolge in Abhängigkeit der jeweiligen dynamischen Charakteristika der Maschine eingestellt, um durch dem Lageregelkreis übergebenen, gefilterten Lagesollwerte keine Eigenschwingungen der Maschine anzuregen.

Werden aufgrund des erfindungsgemäßen Vorgehens beispielsweise aufgrund einer niedrigen Resonanzfrequenz f_{RES} der Maschine bei schnellen Positionsänderungen Resonanzfrequenzen der Maschine angeregt, so ist es nicht erforderlich, dass die Interpolatoreinheit 1 mit einer hohen Interpolator-Taktfrequenz f_{IPO} Lagesollwerte bzw. Abtastwerte der Bahnkurve ermittelt. Diese Abtastwerte müßten zur Vermeidung von Eigenschwingungen der Maschine, die zu erheblichen Bahnabweichungen führen, ohnehin im Lagesollwert-Filter 2 geglättet werden. Die Interpolator-Taktfrequenz f_{IPO} kann somit verringert werden und die dadurch frei werdende Rechenleistung anderen Anwendungen der Steuerung zur Verfügung gestellt werden, ohne dass dadurch zusätzliche Bahnabweichungen resultieren.

Im umgekehrten Fall, in dem die Maschine eine hohe Resonanzfrequenz f_{RES} bzw. einen großen linearen Frequenzbereich aufweist, besteht die Möglichkeit die Interpolator-Taktfrequenz f_{IPO} zu erhöhen. Dies ermöglicht es, eine Maschine entsprechend dynamischer zu betreiben, was wiederum kürzere Bearbeitungszeiten zur Folge hat.

Die tiefpassgefilterte Folge von Lagesollwerten wird im vorliegenden Beispiel anschließend an den Feininterpolator 3 übergeben. Im Fein-Interpolator 3 werden Lagesollwerte im Zeitraster der Lageregelung erzeugt und anschließend an den Lageregler 4 übergeben.

Die Zahl k der zusätzlich im Feininterpolator 3 zu ermittelnden Lagesollwerte ergibt sich aus dem Verhältnis aus der Interpolator-Taktfrequenz f_{IPO} und der Lageregelungs-Taktfrequenz f_{LR}, d.h. k = f_{IPO} / f_{LR}. Unter Berücksichtigung eines möglichst geringen Rechenaufwandes wird vorteilhafterweise die Interpolator-Taktdauer T_{IPO} als ganzzahliges Vielfaches der Lageregelungs-Taktdauer T_{LR} gewählt. Dadurch wird sichergestellt, dass zwischen zwei in der Interpolatoreinheit 1 ermittelten Abtastwerten der Bahnkurve eine ganzzahlige Anzahl k zusätzlicher, vom Fein-Interpolator 3 ermittelter Abtastwerte liegt.

Auf Details bezüglich des Lagereglers 4 sei an dieser Stelle nicht weiter eingegangen; dieser kann z.B. Teil einer bekannten kaskadierten Regelungsstruktur für eine Werkzeugmaschine oder einen Roboter sein.

Im Rahmen der vorliegenden Erfindung ist wie erläutert die Kenntniss bestimmter dynamischer Maschinencharakteristika nötig, insbesondere die Kenntniss der jeweils niedrigsten Resonanzfrequenz f_{RES} der Maschine. Die Ermittlung der Resonanfrequenz f_{RES} kann, nach einem Anstoss durch den Benutzer, von der Steuerung automatisch durchgeführt werden. Alternativ kann die niedrigste Resonanzfrequenz f_{RES} der Maschine auch vom Benutzer vorgegeben werden. Der Wert für die niedrigste Resonanzfrequenz f_{RES} der Maschine wird dann in einem Speicher der Steuerung gespeichert, auf den die Steuerung bei Bedarf zugreifen kann.

Im regulären Betrieb werden die dynamischen Charakteristika der Maschine ausgewertet. Sobald in einem NC-Programm für die Steuerung einer numerisch gesteuerten Werkzeugmaschine ein Befehl auftritt, der eine Bahnbewegung der Maschine bewirkt, wird diese Bewegung auf die Maschinenachsen aufgeteilt, entlang denen die Servomotore ein Verfahren von Maschinenkomponenten ermöglichen. Für jeden Servomotor erfolgt in der Interpolatoreinheit dann eine Berechnung der Punkte auf der Bahnkurve, die der Lageregelung der einzelnen Servomotore als Führungsgrößen bzw. Lagesollwerte vorgegeben werden. Die Ermittlung der Lagesollwerte erfolgt in der Interpolatoreinheit 1 mit der Interpolator-Taktfrequenz f_{IPO}, die wie erläutert abhängig von den dynamischen Charakteristika der Maschine, also insbesondere abhängig von der niedrigsten Resonanzfrequenz eingestellt wird.

Das Spektrum der Folge der von der Interpolatoreinheit 1 berechneten Abtastwerte der Bahnkurve kann für eine im wesentlichen stetige Bewegung schwerpunktmässig niederfrequente Frequenzanteile oder bei einer unstetigen Bewegung schwerpunktmässig hochfrequente Frequenzanteile aufweisen. Liegen hochfrequente Frequenzanteile vor, die im Bereich der Resonanzfrequenz der Maschine sind, müssen diese Frequenzanteile gedämpft bzw. gefiltert werden, damit die Maschine nicht zu Eigenschwingungen angeregt wird.

Zunächst erfolgt diese Dämpfung dadurch, dass die Interpolatoreinheit 1 ein entsprechendes Geschwindigkeitsprofil für die Bahnkurve erzeugt. Gemäß dem Shannonschen Abtasttheorem muß die Abtastfrequenz mindestens doppelt so groß gewählt werden, wie die maximale Frequenz im Spektrum der abgetasteten Bahnkurve. Wird für die Abtastung der Bahnkurve in der Interpolatoreinheit 1 beispielsweise die Resonanzfrequenz f_{RES} der Maschine benutzt, weisen die ausgegebenen Abtastwerte der Interpolatoreinheit 1 Frequenzanteile bis maximal zur halben Resonanzfrequenz der Maschine auf. Einen gewissen Abstand zwischen der Resonanzfrequenz der Maschine und der maximalen Frequenz des Spektrums des Signals einzuhalten ist sinnvoll, da bei derzeit gängigen Maschinentypen keine schmale Resonanzfrequenz f_{RES}, sondern ein Resonanzfrequenzband Δf_{RES} vorliegt, in dem es zu angeregten Eigenschwingungen der Maschine kommen kann.

Wie bereits kurz erläutert, hat es sich als vorteilhaft erwiesen, die Interpolator-Taktdauer T_{IPO} als ganzzahliges Vielfaches, der Lageregelungs-Taktdauer T_{LR} zu wählen. Dies bedingt jedoch, dass die Abtastung mit der Interpolator-Taktfrequenz f_{IPO} nicht mit beliebiger Frequenz erfolgen kann, sondern auf ganzzahlige Vielfache der Lageregelungs-Taktfrequenz f_{LR} beschränkt ist. Um eine Verarbeitung mit maximaler Geschwindigkeit zu gewährleisten, wird in der Interpolatoreinheit 1 die nächst grössere Interpolator-Taktfrequenz f_{IPO} gewählt.
Um eine möglichst genaue Begrenzung des Spektrums der Folge der Abtastwerte auf die für eine Maschine noch zulässige maximale Frequenz zu erreichen, ist eine zusätzliche Lagesollwert-Filterung erforderlich. Dadurch wird letztlich eine weitere Dämpfung realisiert, die eine genauere Begrenzung der maximal zulässigen Frequenz des Spektrums der Folge der Abtastwerte auf Frequenzen unterhalb der Resonanzfrequenz f_{RES} bzw. Nutzfrequenz f_{N} der Maschine durch eine Tiefpassfilterung ermöglicht.

Zur Lagesoliwert-Filterung ist in einer ersten, bevorzugten Variante vorgesehen, die Einheit 2a als Berechnungseinheit auszubilden, in der individuell Filterkoeffizienten berechnet werden.
Alternativ wäre es auch möglich, mehrere Filterkoeffizientensätze für verschiedene Resonanzfrequenzen f_{RES} in einer als Speichereinheit ausgebildeten Einheit 2a abzuspeichern, die dem Lagesollwert-Filter 2 zugeordnet ist. Werden etwa mehrere Filterkoeffizientensätze in der Speichereinheit 2a abgespeichert, so kann der jeweils benötigte Filterkoeffizientensatz eindeutig identifiziert werden, da jedem Filterkoeffizientensatz in der Speichereinheit 2a eine Identifizierungsröße ID zugeordnet ist, die dem Quotienten aus der Resonanzfrequenz f_{RES} der Maschine und der Interpolator-Taktfrequenz f_{IPO} entspricht, d.h. ID = f_{RES}/f_{IPO}.

Nachdem derart Signalanteile im Spektrum der Lagesollwerte beseitigt wurden, die Eigenschwingungen der Maschine verursachen könnten, ist es im dargestellten Beispiel ferner erforderlich, dass anschließend durch eine Feininterpolation Lagesollwerte für die Lageregelung mit der Lageregelungs-Taktfrequenz f_{LR} bereitgestellt werden. Wie bereits erläutert, wird die Interpolator-Taktfrequenz f_{IPO} vorteilhaft als ein ganzzahliges Vielfaches der Lageregelungs-Taktfrequenz f_{LR} gewählt. Dadurch ist sichergestellt, dass zwischen zwei gelieferten Abtastwerten der Interpolatoreinheit 1 ein ganzzahliges Vielfaches der Lageregelungs-Taktdauer T_{LR} liegt, so dass durch den Quotienten aus Interpolator-Taktfrequenz f_{IPO} und Lageregelungs-Taktfrequenz f_{LR} die Anzahl der im Feininterpolator 4 durchzuführenden Interpolationen als ganze Zahl angegeben werden kann.

Neben dem erläuterten Ausführungsbeispiel existieren selbstverständlich auch noch weitere Möglichkeiten zur Ausgestaltung der vorliegenden Erfindung.

## Patentansprüche

1. Verfahren zur Erzeugung von Lagesollwerten für einen Lageregelkreis einer numerisch bahngesteuerten Maschine, wobei
- von einer Interpolatoreinheit Lagesollwerte mit einer bestimmten Interpolator-Taktfrequenz vorgegeben werden,
- die von der Interpolatoreinheit vorgegebenen Lagesollwerte in einem Lagesollwert-Filter einer digitalen Filterung unterzogen werden und
- anschließend die gefilterten Lagesollwerte an den Lageregelkreis übergeben werden, welcher damit die Bewegung auf einer Bahnkurve mit einer bestimmten Lageregelungs-Taktfrequenz steuert,
**dadurch gekennzeichnet, dass**
neben dem Lagesollwert-Filter (2) auch die Interpolator-Taktfrequenz (f_{IPO}) in Abhängigkeit der dynamischen Charakteristika der Maschine derart eingestellt wird, dass durch die dem Lageregelkreis (4) übergebenen, gefilterten Lagesollwerte keine Eigenschwingungen der Maschine angeregt werden.

2. Verfahren nach Anspruch 1, **dadurch gekennzeichnet, dass** als dynamisches Charakteristikum der Maschine deren niedrigste Resonanzfrequenz (f_{RES}) herangezogen wird.

3. Verfahren nach Anspruch 1, **dadurch gekennzeichnet, dass** bei der Einstellung der Interpolator-Taktfrequenz (f_{IPO}) auch die Lageregelungs-Taktfrequenz (f_{LR}) berücksichtigt wird und die Interpolator-Taktfrequenz (f_{IPO}) als ganzzahliger Bruchteil der Lageregelungs-Taktfrequenz (f_{LR}) gewählt wird oder umgekehrt.

4. Verfahren nach Anspruch 1, **dadurch gekennzeichnet, dass** die über den Lagesollwert-Filter (2) gefilterten Lagesollwerte vor der Übergabe an den Lageregelkreis (4) desweiteren noch einer Feininterpolation in einem Feininterpolator (3) unterzogen werden.

5. Verfahren nach Anspruch 4, **dadurch gekennzeichnet, dass** vom Feininterpolator (3) Lagesollwerte mit der Lageregelungs-Taktfrequenz (f_{LR}) an den Lageregelkreis (4) übergeben werden.

6. Verfahren nach Anspruch 2, **dadurch gekennzeichnet, dass** im Lagesollwert-Filter (2) ein Filtersatz mit Filterkoeffizienten für eine bestimmte Resonanzfrequenz (f_{RES}) und eine eingestellte Interpolator-Taktfrequenz (f_{IPO}) berechnet wird.

7. Verfahren nach Anspruch 2, **dadurch gekennzeichnet, dass** in einer dem Lagesollwert-Filter (2) zugeordneten Speichereinheit ein Filtersatz mit Filterkoeffizienten für eine bestimmte Resonanzfrequenz (f_{RES}) und eine eingestellte Interpolator-Taktfrequenz (f_{IPO}) abgespeichert wird.

8. Schaltungsanordnung zur Erzeugung von Lagesollwerten für einen Lageregelkreis einer numerisch bahngesteuerten Maschine, bestehend aus
- einer Interpolatoreinheit zur Vorgabe von Lagesollwerten mit einer bestimmten Interpolator-Taktfrequenz und
- einem Lagesollwert-Filter zur digitalen Filterung der von der Interpolatoreinheit vorgegebenen Lagesollwerte und
- einem Lageregelkreis, der die gefilterten Lagesollwerte derart verarbeitet, dass darüber eine Bewegung auf einer Bahnkurve mit einer bestimmten Lageregefungs-Taktfrequenz steuerbar ist,
**dadurch gekennzeichnet, dass**
neben dem Lagesollwert-Filter (2) auch die Interpolator-Taktfrequenz (f_{IPO}) der Interpolatoreinheit (1) in Abhängigkeit der dynamischen Charakteristika der Maschine derart eingestellt ist, dass durch die dem Lageregelkreis (4) übergebenen, gefilterten Lagesollwerte keine Anregung von Eigenschwingungen der Maschine resultiert.

9. Schaltungsanordnung nach Anspruch 8, **dadurch gekennzeichnet, dass** das Lagesollwert-Filter (2) als FIR-Filter ausgebildet ist, über das eine Tiefpassfilterung resultiert.

10. Schaltungsanordnung nach Anspruch 8, **dadurch gekennzeichnet, dass** das Lagesollwert-Filter (2) eine Speichereinheit umfasst, in der unterschiedliche Filterkoeffizientensätze für unterschiedliche Maschinen-Resonanzfrequenzen (f_{RES}) abgespeichert sind, die jeweils als dynamisches Charakteristikum zur Einstellung der Interpolator-Taktfrequenz (f_{IPO}) dienen.

11. Schaltungsanordnung nach Anspruch 8, **dadurch gekennzeichnet, dass** das Lagesollwert-Filter (2) eine Berechnungseinheit zur Berechnung von Filterkoeffizientensätzen für die jeweilige Maschinen-Resonanzfrequenz umfasst, welche jeweils als dynamisches Charakteristikum zur Einstellung der Interpolator-Taktfrequenz dient.

12. Schaltungsanordnung nach Anspruch 8, **dadurch gekennzeichnet, dass** zwischen dem Lagesollwert-Filter (2) und dem Lageregelkreis (4) desweiteren ein Feininterpolator (3) angeordnet ist, über den vor der Übergabe an den Lageregelkreis (4) desweiteren noch eine Feininterpolation der Lagesollwerte erfolgt.

13. Schaltungsanordnung nach Anspruch 12, **dadurch gekennzeichnet, dass** der Feininterpolator (4) derart ausgebildet ist, dass dieser Lagesollwerte mit der Lageregelungs-Taktfrequenz (f_{LR}) an den Lageregelkreis (4) übergibt.

## Claims

1. Method for generating nominal position values for a position control loop of a numerically continuous-path controlled machine,
- nominal position values with a specific interpolator clock frequency being prescribed by a interpolator unit,
- the nominal position values prescribed by the interpolator unit being subjected to a digital filtration in a nominal position value filter and
- subsequently the filtered nominal position values being transmitted to the position control loop, which by means thereof controls the motion on a path curve with a specific position control clock frequency,
**characterised in that**,
in addition to the nominal position value filter (2), the interpolator clock frequency (f_{IPO}) is also adjusted as a function of the dynamic characteristics of the machine in such a manner that no natural oscillations of the machine are induced by the filtered nominal position values transmitted to the position control loop (4).

2. Method according to claim 1, **characterised in that**, as the dynamic characteristic of the machine, the lowest resonance frequency (f_{RES}) thereof is used.

3. Method according to claim 1, **characterised in that**, during the adjustment of the interpolator clock frequency (f_{IPO}), the position control clock frequency (f_{LR}) is also taken into account, and the interpolator clock frequency (f_{IPO}) is selected as an integral fraction of the position control clock frequency (f_{LR}) or vice versa.

4. Method according to claim 1, **characterised in that** the nominal position values which are filtered via the nominal position value filter (2) are subjected furthermore to another fine interpolation in a fine interpolator (3) prior to the transmission to the position control loop (4).

5. Method according to claim 4, **characterised in that** nominal position values with the position control clock frequency (f_{LR}) are transmitted by the fine interpolator (3) to the position control loop (4).

6. Method according to claim 2, **characterised in that** a filter set with filter coefficients for a specific resonance frequency (f_{RES}) and an adjusted interpolator clock frequency (f_{IPO}) is calculated in the nominal position value filter (2).

7. Method according to claim 2, **characterised in that** a filter set with filter coefficients for a specific resonance frequency (f_{RES}) and an adjusted interpolator clock frequency (f_{IPO}) is stored in a memory unit which is associated with the nominal position value filter (2).

8. Circuit arrangement for generating nominal position values for a position control loop of a numerically continuous-path controlled machine, comprising
- an interpolator unit for prescribing nominal position values with a specific interpolator clock frequency and
- a nominal position value filter for digital filtration of the nominal position values prescribed by the interpolator unit and
- a position control loop which processes the filtered nominal position values in such a manner that by means thereof a motion can be controlled on a path curve with a specific position control clock frequency,
**characterised in that**,
in addition to the nominal position value filter (2), the interpolator clock frequency (f_{IPO}) of the interpolator unit (1) is also adjusted as a function of the dynamic characteristics of the machine in such a manner that no inducement of natural oscillations of the machine results due to the filtered nominal position values transmitted to the position control loop (4).

9. Circuit arrangement according to claim 8, **characterised in that** the nominal position value filter (2) is configured as an FIR filter, via which a low pass filtration results.

10. Circuit arrangement according to claim 8, **characterised in that** the nominal position value filter (2) includes a memory unit, in which different filter coefficient sets for different machine resonance frequencies (f_{RES}) are stored, which serve respectively as the dynamic characteristic for adjustment of the interpolator clock frequency (f_{IPO}).

11. Circuit arrangement according to claim 8, **characterised in that** the nominal position value filter (2) includes a calculating unit for calculating filter coefficient sets for the respective machine resonance frequency, which serves as the dynamic characteristic for adjusting the interpolator clock frequency.

12. Circuit arrangement according to claim 8, **characterised in that** a fine interpolator (3) is furthermore disposed between the nominal position value filter (2) and the position control loop (4), via which fine interpolator furthermore another fine interpolation of the nominal position values is effected prior to the transmission to the position control loop (4).

13. Circuit arrangement according to claim 12, **characterised in that** the fine interpolator (4) is configured in such a manner that the latter transmits nominal position values with the position control clock frequency (f_{LR}) to the position control loop (4).

## Revendications

1. Procédé pour produire des valeurs de consigne de position pour un circuit de régulation de position d'une machine à commande continue de positionnement numérique, selon lequel
un dispositif interpolateur délivre des valeurs de consigne de position avec une fréquence de cycle d'interpolateur déterminée,
les valeurs de consigne de position délivrées par le dispositif interpolateur sont soumises à un filtrage numérique dans un filtre de valeurs de consigne de position, puis
les valeurs de consigne de position filtrées sont transmises au circuit de régulation de position qui, à partir de celles-ci commande le déplacement suivant une courbe de trajectoire avec une fréquence de cycle de régulation de position déterminée,
**caractérisé en ce**
**qu'**en plus du filtre de valeurs de consigne de position (2), la fréquence de cycle d'interpolateur (f_{IPO}) est réglée en fonction des caractéristiques dynamiques de la machine, de telle sorte qu'aucune vibration propre de la machine ne soit excitée par les valeurs de consigne de position filtrées transmises au circuit de régulation de position (4).

2. Procédé selon la revendication 1, **caractérisé en ce qu'**on utilise comme caractéristique dynamique de la machine la fréquence de résonance (f_{RES}) la plus basse de celle-ci.

3. Procédé selon la revendication 1, **caractérisé en ce que** pour le réglage de la fréquence de cycle d'interpolateur (f_{IPO}) on tient compte également de la fréquence de cycle de régulation de la position (f_{LR}) et on choisit la fréquence de cycle d'interpolateur (f_{IPO}) égale à une fraction entière de la fréquence de cycle de régulation de la position (f_{LR})·

4. Procédé selon la revendication 1, **caractérisé en ce que** les valeurs de consigne de position filtrées par l'intermédiaire du filtre de valeurs de consigne de position (2) sont soumises en outre à une interpolation fine dans un interpolateur fin (3) avant d'être transmises au circuit de régulation de position (4).

5. Procédé selon la revendication 4, **caractérisé en ce que** des valeurs de consigne de position sont transmises au circuit de régulation de position (4) avec la fréquence de cycle de régulation de position (f_{LR}) par l'interpolateur fin (3).

6. Procédé selon la revendication 2, **caractérisé en ce que** dans le filtre de valeurs de consigne de position (2), un jeu de filtres est calculé avec des coefficients de filtrage pour une fréquence de résonance (f_{RES}) déterminée et une fréquence de cycle d'interpolateur (f_{IPO}) réglée.

7. Procédé selon la revendication 2, **caractérisé en ce qu'**un jeu de filtres avec des coefficients de filtrage pour une fréquence de résonance (f_{RES}) déterminée et une fréquence de cycle d'interpolateur (f_{IPO}) réglée est mémorisé dans un dispositif de mémoire associé au filtre de valeurs de consigne de position (2).

8. Agencement de circuit pour produire des valeurs de consigne de position pour un circuit de régulation de position d'une machine à commande continue de positionnement numérique, comprenant
un dispositif interpolateur pour délivrer des valeurs de consigne de position avec une fréquence de cycle d'interpolateur déterminée,
un filtre de valeurs de consigne de position pour le filtrage numérique des valeurs de consigne de position délivrées par le dispositif interpolateur,
un circuit de régulation de position qui traite les valeurs de consigne de position filtrées de manière à commander à partir de celles-ci le déplacement suivant une courbe de trajectoire avec une fréquence de cycle de régulation de position déterminée,
**caractérisé en ce**
**qu'**en plus du filtre de valeurs de consigne de position (2), la fréquence de cycle d'interpolateur (f_{IPO}) est réglée en fonction des caractéristiques dynamiques de la machine, de telle sorte qu'aucune vibration propre de la machine ne soit excitée par les valeurs de consigne de position filtrées transmises au circuit de régulation de position (4).

9. Agencement de circuit selon la revendication 8, **caractérisé en ce que** le filtre de valeur de consigne de position (2) est conformé en filtre FIR qui assure un filtrage passe-bas.

10. Agencement de circuit selon la revendication 8, **caractérisé en ce que** le filtre de valeur de consigne de position (2) comprend un dispositif de mémoire dans lequel sont mémorisés différents jeux de coefficients de filtrage pour différentes fréquences de résonance de machine (f_{RES}) qui servent chaque fois de caractéristique dynamique pour le réglage de la fréquence de cycle d'interpolateur (f_{IPO}).

11. Agencement de circuit selon la revendication 8, **caractérisé en ce que** le filtre de valeur de consigne de position (2) comprend un dispositif de calcul pour le calcul de jeux de coefficients de filtrage pour la fréquence de résonance de machine (f_{RES}) qui sert chaque fois de caractéristique dynamique pour le réglage de la fréquence de cycle d'interpolateur.

12. Agencement de circuit selon la revendication 8, **caractérisé en ce qu'**entre le filtre de valeur de consigne de position (2) et le circuit de régulation de position (4) est disposé en outre un interpolateur fin (3) qui réalise une interpolation fine des valeurs de consigne de position avant transmission au circuit de régulation de position.

13. Agencement de circuit selon la revendication 12, **caractérisé en ce que** l'interpolateur fin (4) est agencé de manière telle que celui-ci transmet les valeurs de consigne de position au circuit de régulation de position (4) avec la fréquence de régulation de position (f_{LR}).
